# EUROPÄISCHE PATENTSCHRIFT

(11) **EP 2 444 681 B1**
(45) Veröffentlichungstag und Bekanntmachung des Hinweises auf die Patenterteilung: **12.02.2014**
(21) Anmeldenummer: 11008330.0
(22) Anmeldetag: 17.10.2011
(51) Int. Cl.: F16C 13/00

(54) **Walze oder Walzenelement mit elastomerem Walzenmantel**
Roller or roller element with elastomer cover
Rouleau ou élément de rouleau doté d'une gaine en élastomère

(30) Priorität: 22.10.2010 DE 102010049457
(43) Veröffentlichungstag der Anmeldung: 25.04.2012
(73) Patentinhaber: Paul Sauer GmbH & Co. Walzenfabrik KG, 10179 Berlin (DE)
(72) Erfinder: Sauer, Alexander, 10179 Berlin (DE)

(56) Entgegenhaltungen:
- EP-A1- 1 041 198
- EP-B1- 1 657 076
- WO-A1-2008/116832
- DE-B- 1 211 667
- US-A1- 2004 127 126

## Beschreibung

Die Erfindung betrifft Walzen und Walzenelemente mit einem elastomeren Walzenmantel, die insbesondere zum Auf- und Übertragen von flüssigen Medien wie Farben, Lacken, Lösungen, Klebstoffen und ähnlichem in Druckwerken und Walzenauftragmaschinen, zum mechanischen Bearbeiten von Werkstückoberflächen oder zum Andrücken, Bewegen, Halten, Leiten, Führen, Quetschen oder Schälen von Materialbahnen, Werkstücken oder Lebensmitteln in Be- und Verarbeitungsmaschinen geeignet sind.

Elastomere Beschichtungen (= Walzenmäntel) von Walzen und Rollen in Druck- und Lackierwerken von Verpackungs-, Bogenoffset- und Rotationsdruckmaschinen (insbesondere Farb- und Feuchtwalzen), in Walzenauftragmaschinen (insbesondere Kaschier-, Laminier- und Lackierwalzen) sowie in Maschinen zur Holz-, Metall- oder Kunststoffverarbeitung (insbesondere Presseure, Quetsch-, Schleif- und Transportwalzen) sind einer hohen mechanischen und dynamischen Belastung ausgesetzt. Dies führt insbesondere bei trockenen Anwendungen zu einer Erhitzung des Elastomermantels und zu einem erhöhten Abrieb an der Oberfläche der Walzenbeschichtung. Mechanische Belastungen werden auch zwischen zwei benachbarten Walzen oder zwischen einer Walze und einer anliegenden Oberfläche durch den betriebsbedingten Anpress- oder Liniendruck und durch Reibungskräfte hervorgerufen. Eine dynamische Belastung des gummielastischen Walzenmantels erfolgt durch das wiederholte Eindrücken der Beschichtungsoberfläche im Nip, d.h. an der Kontaktfläche zwischen zwei benachbarten Walzen oder zwischen einer Walze und einer Werkstückoberfläche. Die Rotation der Walze bewirkt dabei ein Wandern des Nips über den Umfang des Walzenmantels, wobei zusätzlich Scherkräfte auf das Material der gummielastischen Walzenbeschichtung wirken. Insbesondere in schnell laufenden Anlagen sowie bei hohen Linienlasten führen die auf den Walzenbezug einwirkenden Druck- und Scherkräfte deshalb nicht selten zu einer unvorhersehbaren Zerstörung des Walzenbezugs (= Walzenmantels) und einer damit verbundenen Störung und Behinderung des Produktionsprozesses.

Zur Behebung dieses Problems werden elastomere Walzenbezüge bisher durch die Variation von Rohstoffen, Additiven und Füllstoffen verbessert. Eine Veränderung der Rohstoffe und ihrer Anteile im Elastomermaterial des Walzenmantels sowie der Zuschlag von Additiven und Füllstoffen bewirken jedoch stets auch eine Veränderung der Materialeigenschaften des elastomeren Bezugswerkstoffs. Aus diesem Grund geht die Optimierung der Materialfestigkeit eines gummielastischen Walzenmantels stets mit einer aufwendigen Korrektur der chemischen Beständigkeit des Bezugsmaterials und seiner physikalischen Werkstoffeigenschaften einher.

Es bestand somit die Aufgabe, Walzen mit einem elastomeren Walzenmantel zu schaffen, bei denen, ohne die Materialeigenschaften der Walzenbeschichtung zu verändern, die Auswirkung der mechanischen und dynamischen Belastung auf die elastomere Walzenbeschichtung verringert ist. Gelöst wird diese Aufgabe durch die Einbettung einer faserhaltigen Einlage im Walzenbezug.

Ein Walzenelement, das aus drei Schichten Material bestehen kann, wobei die Mittelschicht Fasern beinhaltet, während die Innen- und Außenschicht keine Fasern enthalten ist aus US 2004/0127126 bekannt.

Die Offenlegungsschrift DE 10034932 A1 beschreibt Druckwalzen mit einem starren Walzenkern und einem mit diesem lösbar verbundenen Walzenmantel mit einer äußeren Schicht aus einem elastomeren oder elastischen Kunststoffmaterial. Dieser Walzenmantel kann wahlweise vollständig aus einem Bezug aus dem elastomeren oder elastischen Kunststoffmaterial bestehen oder aus einem Trägerkörper in Form einer dünnen Hülse aus Metall oder Faserverbundwerkstoff, der mit einem solchen Bezug versehen ist. Walzenmäntel ohne Trägerkörper können optional im Bereich der Mantelinnenfläche eine Einlage aus Gewebe, Geflecht, Vlies oder Textilfäden enthalten, um einen festeren Sitz des Walzenmantels auf dem Walzenkern zu gewährleisten. Eine Erhöhung der mechanischen und dynamischen Belastungsfähigkeit der elastomere Walzenbeschichtung kann dadurch nicht erreicht werden.

Aus dem Stand der Technik ist die Herstellung von Faserverbundwerkstoffen unterschiedlicher Art aus Fasermaterial, insbesondere Gewebestrukturen, und Harzen allgemein bekannt. Anwendungen im Bereich der Walzenkonstruktion betreffen die Herstellung von leichtgewichtigen Trägerhülsen, sogenannten Sleeves, für darauf aufzutragende Walzenbeschichtungen. Faserverbundwerkstoffe aus Fasermaterial und Harzen der Art, wie sie beispielsweise nach UNSPSC Code 13111000 Resins und den zugehörigen Untergruppen klassifiziert sind, sind jedoch nicht vergleichbar mit gummielastischen Walzenmäntein. Ein gummielastischer Walzenmantel stellt vielmehr eine elastomere Walzenbeschichtung dar und besteht aus einem Material mit typischen gummiartigen Eigenschaften, insbesondere bezüglich Dehnungs-, Rückstell- und Elastizitätsverhalten.

Gummielastische Beschichtungen mit einer textilen Verstärkungseinlage sind im Druckbereich als Ummantelung von Gummituchzylindern in Form von Gummidrucktüchern oder kanallosen Gummituchhülsen bekannt. Gummituchbeschichtungen weisen im Allgemeinen eine dehnungsarme Gewebelage zwischen zwei Elastomerschichten auf. Im Vergleich zu Walzenbeschichtungen ist die Dicke einer Gummituchbeschichtung deutlich geringer: Während insbesondere bei Druckwalzen (d.h. Farb-, Feucht- und Lackierwalzen), aber auch bei anderen Walzen mit Elastomerbeschichtung eine Verformbarkeit der Walzenbeschichtung und ihrer Oberfläche technisch erwünscht ist, ist bei Drucktüchern, die ja ein feines Druckbild möglichst unverändert von einer Druckplatte übernehmen und auf einen Bedruckstoff übertragen sollen, eine äußerst hohe Formstabilität gefordert. Die Funktion der im Vergleich zur elastomeren Deckschicht weicheren Gewebeeinlage bei Gummitüchern besteht daher darin, die radiale Nachgiebigkeit der Beschichtungsoberfläche im Kontakt mit dem Plattenzylinder bzw. dem Bedruckstoff zu erhöhen und somit eine tangentiale Verformung der Beschichtungsoberfläche im jeweiligen Kontakt zu unterbinden. Zur Gewährleistung der Formstabilität weisen Gummitücher nur eine geringe Dicke von etwa 1 bis 3 mm auf, während die Dicke von Walzenbeschichtungen gewöhnlich im Bereich von 5 bis 30 mm liegt.

Entgegen den Lehren des Standes der Technik wurde gefunden, dass durch eine faserhaltige Schicht innerhalb des elastomeren Walzenmantels ohne wesentliche Veränderung der radialen und tangentialen Verformbarkeit der Oberfläche des elastomeren Walzenmantels die Auswirkung der mechanischen und dynamischen Belastung auf die elastomere Walzenbeschichtung verringert werden kann.

Gegenstand der Erfindung sind daher Walzen und Walzenelemente mit einem elastomeren Walzenmantel gemäß dem Anspruch 1 sowie daraus folgende Ausführungsformen, Herstellverfahren und Verwendungen.

Der grundsätzliche Aufbau und die Herstellung von Walzen, Walzenbezügen, Fasern, Fäden und textilen Flächengebilden sind in der Walzen-, Faser- und Textilkunde hinlänglich bekannt und dem Erfindungsgegenstand zugrunde gelegt.

Der Erfindungsgegenstand umfasst wesentlich einen zylindrischen Walzenkern, der auch aus einer Trägerhülse bestehen oder eine solche umfassen kann, einen diesen umgebenden gummielastischen Walzenmantel (auch Walzenbezug bzw. Bezug oder Walzenbeschichtung bzw. Beschichtung genannt) aus Elastomer sowie eine oder mehrere in diesem Walzenmantel eingebettete Einlagen aus Fasermaterial, die auch Fasergebilde oder Festigkeitsträger genannt werden. Das Fasergebilde besteht dabei wahlweise aus ein- oder mehrlagigen Wicklungen aus Fasern oder Fasersträngen, einem textilen Flächengebilde aus Fadengelege, Gewebe, Geflecht, Gestrick, Gewirke, Vlies oder Filz und / oder losen Schnittfasern. Zur Verwendung wird dieser Grundkörper gewöhnlich stirnseitig mit Zapfen und / oder Lager versehen oder wahlweise starr oder frei drehend auf eine Walzenachse montiert.

Der Erfindungsgegenstand kann grundsätzlich zum Auf- und Übertragen flüssiger Medien, wie Leime, Klebstoffe, Farben, Lösungen, Emulsionen, Lacke etc., auf laufende Bahnen oder Werkstücke, zum Andrücken, Bewegen, Strecken, Halten oder Führen von Bahnmaterialien oder Werkstücken in Be- und Verarbeitungsmaschinen, zum Schälen, Reinigen oder Auftragen von Lebensmitteln oder zur mechanischen Bearbeitung von Werkstückoberflächen verwendet werden. Mögliche Ausführungsformen betreffen daher Breitstreckwalzen, Bahnleit-, Bahnführungs-, Umlenk- und Transportwalzen, -rollen und -räder, Auf- und Übertragwalzen in Walzenauftragmaschinen allgemein sowie Farb- und Feuchtwalzen in Druckmaschinen, Leim- und Lackierwalzen bzw. Laminier- und Kaschierwalzen im Besonderen, aber auch Anklebe-, Andrück-, Anlege-, Quetsch- und Schleifwalzen, insbesondere für die Bearbeitung von Holz-, Metall- und Kunststoffoberflächen, sowie Auftrag- und Schälwalzen im Lebensmittelbereich. Für jede dieser und ähnlicher Anwendungsformen kann durch entsprechende Gestaltung des Erfindungsgegenstands eine geeignete Walze oder Rolle erhalten werden.

Zur Herstellung des Erfindungsgegenstands kann in einer einfachen Ausführungsform ein konventionell hergestellter Schlauch aus elastomerem Material verwendet werden, der mit einer Fasereinlage zur Gewährleistung der mechanischen Festigkeit versehen ist. Ein solcher Schlauch oder Schlauchabschnitt kann in der erforderlichen Länge direkt auf einen Walzenkern aufgeschoben und gegebenenfalls mit diesem verklebt werden. Andererseits ist es möglich, einen entsprechenden Walzenmantel auch direkt auf dem Walzenkern aufzubauen. Erfindungsgemäß besteht der Walzenmantel daher vollständig oder teilweise aus einem vorgefertigten Schlauch oder Schlauchabschnitt mit faserhaltiger Einlage oder weist einen dem entsprechenden gleichartigen Aufbau auf.

Der Aufbau und die Herstellung von Schläuchen mit faserhaltiger Einlage, beispielsweise Druckluft-, Wasser- und Feuerwehrschläuche, ist aus dem Stand der Technik weitgehend bekannt: Als Seele wird dabei die innere Schicht eines Schlauches bezeichnet, die abhängig von der beabsichtigten chemischen, mechanischen oder thermischen Beständigkeit aus einem elastischen Kunststoff oder Gummi besteht. Darüber befindet sich eine Einlage aus faserhaltigem Material, beispielsweise ein Textil, ein Vlies, ein Filz oder eine spiral- oder kreuzförmige Faserwicklung, welche den Schlauch gegen zu leichtes Knicken sichert. Eine Decke aus elastischem Kunststoff oder Gummi ummantelt den Schlauch, um die Einlage gegen chemische Einflüsse, Temperatur, Abrieb, Ozon, UV-Strahlung und mechanische Verletzung zu schützen. Der Schlauch kann auch mehrere Einlageschichten enthalten, die gewöhnlich durch eine elastische Zwischenschicht voneinander getrennt sind. Die Einlage kann beispielsweise Fasern aus Aramid (Kevlar / Nomex), Glas, Polyamid, Polyethylen, Polyester, Polytetrafluorethylen (PTFE), Polyvinylidenfluorid, Polyurethan, Polyvinylchlorid, Rayon, Naturfaser, Kohlenstoff, Metall, Stahldraht, Stahlcord und / oder Kombinationen enthalten. Diese Fasern bzw. eine daraus gefertigte Einlage können auf unterschiedliche Weise imprägniert, chemisch und / oder physikalisch vorbehandelt, mit bestimmten elektrostatischen Eigenschaften ausgestattet und / oder - beispielsweise mit Klebstoff, Haftvermittler, Vernetzungsmittel, Aktivator, einem Kunststofffilm oder Elastomer - beschichtet sein. Bei der erfindungsgemäßen Verwendung können Form und Zusammensetzung einer Fasereinlage sowohl innerhalb der Fasereinlage als auch innerhalb des gummielastischen Walzenmantels variieren.

Bei der Verwendung eines vorgefertigten Schlauchs oder Schlauchabschnitts zur Herstellung des erfindungsgemäßen Walzenmantels ist es vorteilhaft, den Innendurchmesser geringfügig kleiner zu wählen als den Außendurchmesser des Walzenkerns. Weiter ist es vorteilhaft, Schlauch und Walzenkern miteinander zu verbinden. Hierzu können beispielweise die Mantelfläche des Walzenkerns und / oder die innere Oberfläche des Schlauchs bei der Montage mit geeigneten Kaltklebstoffen versehen werden. Es ist aber auch möglich, eine oder beide Oberflächen mit einem Film aus Schmelzklebstoff zu versehen und die montierte Walze zur Verklebung zu erwärmen. Ein Walzenmantel aus einem vorgefertigten Schlauch kann nach der Montage jeder üblichen Endbearbeitung von Walzen und Walzenbezügen unterzogen werden. Vorteilhaft ist dabei insbesondere das abschließende Rundschleifen des Walzenmantels und das Auswuchten der Walze. Der Walzenkern kann an seiner Mantelfläche auch eine Deckschicht aus Kunststoff oder Gummi aufweisen, auf welche der vorgefertigte Schlauch montiert wird. Diese Deckschicht kann nach allgemein bekannten Verfahren aufgebracht sein, es kann sich aber auch um den Walzenmantel einer bereits verwendeten Walze handeln, dessen Durchmesser auf das erforderliche Maß reduziert wurde. Nach der Montage eines vorgefertigten Schlauchs auf den Walzenkern können auf die Mantelfläche des Schlauches und / oder um diesen herum eine oder mehrere Schichten aus Elastomer und / oder Kunststoff aufgebracht werden.

Bei Aufbau des Walzenmantels auf einem Walzenkern wird auf einen mit einer ersten Schicht aus dem elastomeren Material vorbeschichteten Walzenkern ein aus Fasern gebildeter Festigkeitsträger aufgebracht und dieser mit einer Deckschicht aus dem elastomeren Material versehen. Dabei kann die erste Schicht wahlweise aus noch nicht verfestigtem elastomeren Material bestehen oder, beispielsweise beim Wiederverwenden einer gebrauchten Walze, eine bereits verfestigte und rundgeschliffene Elastomerschicht sein. Hierauf kann ein bereits vorgefertigtes Fasergebilde, beispielsweise als Röhre, Matte oder Streifen, aufgebracht werden. Der faserhaltige Festigkeitsträger kann aber auch, beispielsweise durch das Verweben oder Legen von Fasersträngen oder durch das Aufstreuen von losen Fasern, direkt an der Oberfläche des vorbeschichteten Walzenkerns hergestellt werden. Zur materialschlüssigen Einbettung können die Mantelfläche des vorbeschichteten Walzenkerns, die Fasern, Faserstränge und / oder das Fasergebilde mit einem geeigneten Haftvermittler und / oder einem kalt- oder heißklebenden Klebstoff versehen werden. Auf die beschriebene Weise werden insbesondere konzentrisch angeordnete Verstärkungen aus dem Fasergebilde erhalten. Hülsenförmige Verstärkungen werden dabei vorzugsweise aus Röhren oder Matten hergestellt, können aber auch dadurch erhalten werden, dass Streifen aus textilem Flächengebilde parallel nebeneinander in Umfangsrichtung der Walze aufgebracht oder entlang der Walzenachse, also axial spiralförmig, aufgewickelt werden.

Möglich ist auch, die Mantelfläche des vorbeschichteten Walzenkerns mit einer noch nicht verfestigten, d.h. nicht ausvulkanisierten oder nicht ausgehärteten bzw. vernetzten Schicht aus Elastomer zu versehen und das Fasermaterial in dieser Schicht einzubetten oder in diese Schicht hinein zu drücken. In der beschriebenen Weise können auch mehrere Lagen des Fasergebildes in einem vorbestimmten Abstand zueinander im elastomeren Walzenmantel gebildet werden. Mehrere in einem vorbestimmten Abstand angeordnete Schichten des Fasergebildes können vorteilhaft auch dadurch erhalten werden, dass bei der Herstellung des Walzenmantels eine Platte aus dem elastomeren Material, beispielsweise eine Kautschukplatte, und ein matten- oder streifenförmiges Fasergebilde parallel auf einen Walzenkern aufgewickelt werden. Im Querschnitt der Walze erscheint die Fasereinlage dann nicht mehr konzentrisch sondern radial spiralförmig. Vorteilhaft ist die Fasereinlage derartig innerhalb des Walzenmantels angeordnet, dass sich bei Betrieb der Walze keine Kante des Fasergebildes an der Mantelfläche des Walzenbezugs abbildet.

Der Aufbau und die Herstellung von Walzen mit und ohne Beschichtung ist weitgehend bekannt. Das Material des Walzenmantels besteht erfindungsgemäß aus Elastomer. Hierunter werden Stoffe der UNSPSC Codegruppe 13100000 Rubber and Elastomers und der zugehörigen Untergruppen aufgefasst. Hiervon werden insbesondere Elastomere auf Basis von Naturkautschuk (NR), synthetischem Kautschuk, z.B. Acrylnitril-Butadien-Kautschuk (NBR, HNBR, XNBR), Ethylenkautschuk (CM, CSM), Ethylen-Propylen-Kautschuk (EPM, EPDM), Styrol-Butadien-Kautschuk (SBR), Butylkautschuk (IIR), Polyurethankautschuk (PUR), Polyacrylatkautschuk (ACM), Epichlorhydrinkautschuk (CO, ECO), Silikonkautschuk (Q, VQ, MQ etc.), Fluorkautschuk (FM, FKM) oder Chloropren-Kautschuk (CR), elastischem Thermoplast, z.B. Polyvinylchlorid (PVC), thermoplastischem Elastomer (TPE), z.B. elastifiziertes Polyolefin, Styrol-Blockcopolymerisat, Copolyester-Elastomer oder thermoplastisches Polyurethan (TPU), sowie auf Basis von ein- oder mehrkomponentigen Polyester- oder Polyetherurethansystemen oder geeigneten Kombinationen oder Mischungen der genannten Werkstoffe eingesetzt. Bei der Herstellung der Walzen wird der Kautschuk in der Regel durch Vulkanisation vernetzt und erhält somit die gewünschte Festigkeit, während elastische Thermoplaste und thermoplastische Elastomere durch die Abkühlung aus der Schmelze und Polyurethansysteme durch Polymerisation und anschließende Abkühlung ihre Festigkeit erlangen. Das elastomere Material des gummielastischen Walzenmantels kann optional auch geschäumt vorliegen. Die Härte des Materials liegt gewöhnlich im Bereich von etwa 10 bis 100 Shore A.

Erfindungsgemäß kann das ausgewählte Elastomer alle üblichen Komponenten, Additive und Füllstoffe sowie optional funktionelle Zusätze wie Substanzen mit funktionellen chemischen Gruppen enthalten. Bei letzteren kann es sich beispielsweise um Substanzen zur Einstellung der Hydrophilie der Walzenoberfläche handeln, z.B. um mono-, oligo- oder polymere Substanzen mit hydrophilen oder hydrophoben Gruppen, beispielsweise Hydroxyl-, Carboxyl-, Carboxylat-, Amido-, Silanol-, Sulfonsäure-, Sulfonat- und / oder Fluoralkylgruppen. Diese und andere funktionelle Zusätze können in das ausgewählte Elastomer des Bezuges eingemischt oder, beispielsweise durch Copolymerisation oder polymeranaloge Umsetzung, reaktiv eingebunden sein. Des weiteren kann das elastomere Material auch polymere Substanzen enthalten. Durch geeignete Auswahl des Elastomers sowie durch Modifizierung desselben durch entsprechende Additive, einschließlich Schnittfasern, Mikro- und Nanopartikein, können spezielle Eigenschaften des Walzenmantels wie chemische Beständigkeit, Reiß- und Schnittfestigkeit, Steifigkeit und Kompressibilität, Glätte und Adhäsion sowie elektrostatische Eigenschaften der jeweiligen Anwendung und Anforderung entsprechend eingestellt werden.

Erfindungsgemäß stellt der aus Fasern gebildete Festigkeitsträger bzw. die das Fasergebilde enthaltende Schicht neben den das Elastomermaterial grundsätzlich aufbauenden Additiven, Füllstoffen (einschließlich Schnittfasern) und Zusätzen die wesentliche mechanische Verstärkung des gummielastischen Walzenmantels dar.

Fadengelege, Gewebe, Geflechte, Gestricke, Gewirke, Vlies und Filz sind zwei- oder dreidimensionale Gebilde aus Spinnfasern, Filamenten, Foliebändchen oder Garnen und werden in der Textilkunde unter der Bezeichnung "textile Flächengebilde" zusammengefasst. Spinnfasern sind Textilfasern begrenzter Länge, die zu Spinnfasergarn versponnen oder zu Vlies oder Filz verarbeitet werden können. Filamente sind Textilfasern sehr großer, praktisch endloser Länge und können ebenfalls zu Garn verarbeitet werden. Folienbändchen sind längsgeschnittene Folien geringer Dicke, die auch fibrilliert sein und somit eine netzartige Struktur aufweisen können. Garn ist eine Sammelbezeichnung für linienförmige textile Gebilde, die aus Spinnfasern, Filamenten oder Bändchen hergestellt sind. Unterschieden wird zwischen Einfachgarnen, gefachten Garnen (z.B. Rovings) und Zwirnen. Unter Verstärkungsfasern werden gewöhnlich faserhaltige Komponenten im Faserverbundwerkstoff verstanden, die dem Werkstoff hohe Festigkeit und Steifigkeit bei niedrigem Gewicht verleihen. Ihre charakteristischen Eigenschaften sind zudem geringe bzw. negative thermische Dehnung, gute chemische Beständigkeit und gute Temperaturbeständigkeit. Zu den typischen Verstärkungsfasern gehören beispielsweise Aramidfasern, Carbonfasern, Glasfasern und Fasern aus hochfestem Polyethylen. Besonders feine Fasern und Filamente werden auch als Mikrofasern und Mikrofilamente bezeichnet.

Das erfindungsgemäße Fasergebilde kann in Form eines textilen Flächengebildes aus Fäden von nahezu endlosen Filamenten, Bändchen, Rovings, Garn, Zwirn oder Kombinationen davon vorliegen. Es kann aber auch aus ein- oder mehrlagigen Wicklungen von Fasern oder Fasersträngen (z.B. Fäden und Schnüre) bestehen sowie aus Fadenabschnitten oder Schnittfasern (insbesondere Kurzschnittfasem), die beispielsweise ein Vlies, einen Filz oder eine lockere Faserschicht bilden. Das erfindungsgemäße Fasergebilde umfasst somit Fadengelege, Gewebe, Geflechte, Gestricke, Gewirke, Vlies, Filz, ein- oder mehrlagige Wicklungen aus Fasern oder Fasersträngen und Schichten aus Schnittfasern sowie Kombinationen daraus. Die Fäden und Fasern dieses Fasergebildes können wahlweise aus Fasern, Filamenten und / oder Bändchen gleichen und / oder unterschiedlichen Materials sowie gleicher und / oder unterschiedlicher Dicke, Konsistenz und Qualität bestehen und auch selbst eine konstante und / oder variable Dicke, Konsistenz und Qualität aufweisen. Das Material der Fasern, Filamente und / oder Foliebändchen besteht insbesondere aus Carbon, Glas, Metall, Naturfaserstoff sowie aus Synthesefasern und Chemiefaserstoff, beispielsweise aus Aramid (Kevlar, Nomex), Polyamid, Polyethylen, Polypropylen, Polyester, Polytetrafluorethylen, Polyvinylidenfluorid, Polyurethan-Kautschuk, Polyvinylchlorid, Rayon, Polyetheretherketon, Polyetherimid, Polyethersulfon, Polysulfon und / oder Kombinationen daraus. Besonders vorteilhaft sind Glasfasern, Carbonfasern und Synthesefasern aus hochschmelzenden Polymeren wie Aramid, Polyamide, Polyacrylnitril, hochfestes Polyethylen und Polyester. Die Fasern, Filamente und Bändchen selbst und / oder ein Garn, Zwirn, Roving, Faserstrang und / oder textiles Flächengebilde daraus können optional auf unterschiedliche Weise imprägniert, chemisch und / oder physikalisch vorbehandelt und / oder - beispielsweise mit Klebstoff, Haftvermittler (Faserfinish), Vernetzungsmittel, Aktivator, einem Kunststofffilm oder Elastomer - beschichtet sein.

In einer vorteilhaften Ausführungsform liegt das erfindungsgemäße Fasergebilde als textiles Flächengebilde vor, dessen Fäden sich zumindest teilweise überkreuzen, umschlingen oder berühren wobei die dabei gebildeten Kreuzungs-, Umschlingungs- oder Berührungspunkte im Wesentlichen verschiebefest fixiert sind. Eine mögliche Ausführungsform davon stellen gitter- oder netzartige Gewebe dar, die auch als Fasergittergewebe bekannt sind. Besonders vorteilhaft sind darunter sogenannte Drehergewebe, welche sehr enge und feste Fadenverkreuzungen aufweisen. Vorteilhaft sind auch textile Flächengebilde, insbesondere Gewebe und Gelege deren Kreuzungs- oder Berührungspunkte mittels Thermofixierung fixiert sind. Derartige Verfahren werden beispielsweise in EP 0742300 A1 beschrieben. Eine weitere Möglichkeit der Fixierung von Kreuzungs- und Berührungspunkten besteht darin, das textile Flächengebilde oberflächlich mit einer hauchdünnen Harz- oder Polymerbeschichtung zu versehen. Insbesondere bei einem Fadengelege, das beispielsweise parallele Längsfäden und wahlweise rechtwinklig und / oder in gleicher oder unterschiedlicher Richtung diagonal zu den Längsfäden angeordnete Querfäden aufweist, ist eine Fixierung der Fäden mit einem Bindemittel vorteilhaft.

Ein weiteres vorteilhaftes Merkmal des erfindungsgemäßen Fasergebildes besteht darin, dass das elastomere Material des gummielastischen Walzenmantels die Struktur des Fasergebildes durchdringt. Mittels dieser Durchdringung wird einerseits das Fasergebilde formschlüssig in den gummielastischen Walzenmantel eingebettet und andererseits erreicht, dass das elastomere Material eine einheitliche, durchgehende Bezugsschicht bildet. Zu diesem Zweck ist es erforderlich, dass die Fasern bzw. Fäden im Fasergebilde einen Abstand voneinander aufweisen, der auf die Viskosität des gewählten elastomeren Materials abgestimmt ist. Dementsprechend sind bei einem zähen Material wie Kautschuk eher größere Abstände vorzusehen, während bei einem flüssigen Material wie Gießpolymer (z.B. Polyurethan) auch kleinere Abstände vorliegen können. Bei textilen Flächengebilden entspricht dieser Abstand der Maschenweite und ist zudem abhängig vom Fadendurchmesser, vom Fadentyp, vom Fadensystem, vom Fadenmaterial, von der Anordnung der Fäden im gewählten textilen Flächengebilde sowie von der Zug- und Reißfestigkeit der Fäden. Die Maschenweite bzw. die mittlere Distanz zwischen zwei benachbarten Fäden des erfindungsgemäßen Fasergebildes beträgt daher allgemein mindestens 0,5 mm bei niedrigviskosem Bezugsmaterial sowie mindestens 1 mm bei höherviskosem Bezugsmaterial. Vorteilhaft sind beispielsweise Maschenweiten bzw. Abstände im Bereich von etwa 2 bis etwa 20 mm. Technisch ausreichend sind häufig Maschenweiten bzw. Abstände von etwa 3 bis etwa 10 mm beziehungsweise von etwa 1/30 bis etwa 1/10 des Außendurchmessers des Walzenmantels. Unter Berücksichtigung von sowohl regelmäßigen als auch unregelmäßigen Strukturen eines textilen Flächengebildes gilt auch für fixierte Kreuzungs- oder Berührungspunkte darin ein Abstand von mindestens 0,5 bzw. 1 mm in Abhängigkeit von der Viskosität des Bezugsmaterials sowie ein vorteilhafter Abstand im Bereich von etwa 2 bis etwa 20 mm. Handelsübliche Gewebe und Geflechte weisen in der Regel quadratische oder rechteckige Maschen aus im rechten Winkel zu einander stehenden Fäden auf. Grundsätzlich jedoch, insbesondere bei Fadengelegen, können die Maschen aber auch andere regelmäßige, beispielsweise Dreieck-, Sechseck-, Achteck-, Parallelogramm-, Rauten-, Trapez- und Drachenformen, oder unregelmäßige Geometrien aufweisen.

Erfindungsgemäß weist der Festigkeitsträger aus dem Fasergebilde wahlweise eine hülsenförmige, gürtelförmige oder radial spiralförmige Gestalt auf. Die gewählte Gestalt kann von einem oder mehreren vorgefertigten zwei- oder dreidimensionalen textilen Gebilden, beispielsweise aus Röhren, Matten, Streifen (= Bänder) oder einzelnen Fäden, gebildet sein. Das textile Flächengebilde kann aber gegebenenfalls auch unter unmittelbarer Herstellung im Produktionsprozess des Walzenmantels erhalten werden. Während hülsen- und gürtelförmige Verstärkungen konzentrisch zum Walzenkern, d.h. mit radial konstantem Abstand zur Mantelfläche des Walzenkerns angeordnet sind, weist das textile Flächengebilde einer radial spiralförmigen Verstärkung einen in Umfangsrichtung ansteigenden Abstand zur Mantelfläche des Walzenkerns auf. Durch diese Anordnung können von einem durchgehenden textilen Flächengebilde mehrere Lagen übereinander hergestellt werden.

Erfindungsgemäß enthält der gummielastische Walzenmantel wenigstens eine Schicht mit Fasergebilde. Im Walzenmantel können aber auch zwei oder mehr Schichten mit wahlweise gleichem oder unterschiedlichem Fasergebilde vorliegen, welche wahlweise nebeneinander und / oder übereinander angeordnet sind. Übereinander angeordnete Lagen aus dem verstärkenden Fasergebilde können zwar grundsätzlich auch im direkten Kontakt miteinander stehen, vorzugsweise sind sie aber so angeordnet, dass sie sich nicht gegenseitig berühren. Vorteilhaft beträgt der Abstand zwischen direkt übereinander liegenden Lagen etwa 0,5 bis 2 mm. Prinzipiell kann auf diese Weise der gesamte Walzenmantel mit dem Fasergebilde, insbesondere einem textilen Flächengebilde gefüllt werden. Vorwiegend, insbesondere bei radial spiralförmiger Anordnung, nimmt das Fasergebilde aber einen maximalen Volumenanteil von etwa 50% im gummielastischen Walzenmantel ein. Ausreichend ist in der Regel ein Volumenanteil bis etwa 35%. Häufig genügen sogar 1 oder 2 Lagen aus jeweils einem hülsenförmigen Fasergebilde und / oder 2 bis 5 nebeneinander liegenden gürtelförmig angeordneten Fasergebilden. Das Fasergebilde ist in einigen Anwendungen so angeordnet, dass es sich im bestimmungsgemäßen Gebrauch der Walze oder des Walzenelements nicht an der Oberfläche des Walzenmantels abbildet. Dies ist beispielsweise vorteilhaft, wenn beim Auftrag flüssiger Medien (z.B. Lacke) auf Materialbahnen oder Werkstückoberflächen ein möglichst gleichmäßiger Medienauftrag erwünscht ist, oder wenn beim Be- und Verarbeiten von Folien eine Strukturierung der Folie vermieden werden soll. In anderen Anwendungsfällen, z.B. beim Leimauftrag oder wenn eine Strukturbildung erwünscht ist, kann das Fasergebilde auch so angeordnet sein, dass es sich unter bestimmungsgemäßen Einsatzbedingungen an der Walzenoberfläche abbildet. In rein mechanischen Anwendungsfällen, beispielsweise bei Schleifwalzen, Antriebswalzen, Förderrollen oder Laufrädern, ist es oft unerheblich, ob sich das Fasergebilde an der Walzenoberfläche abbildet oder nicht.

Erfindungsgemäß besteht eine wesentliche Funktion des Fasergebildes im gummielastischen Walzenmantel darin, den Walzenmantel gegen die beanspruchungsbedingt an seiner Umfangsfläche einwirkenden Druck- und Scherkräfte zu stabilisieren. Es ist daher wenig hilfreich, das Fasergebilde ausschließlich direkt oder nahe am Walzenkern anzuordnen. Funktionsgerecht weist der gummielastische Walzenmantel deshalb das Fasergebilde radial zumindest in den äußeren zwei Dritteln seines Volumens auf. Zur Vermeidung mechanischer Angriffsflächen und gegebenenfalls zur Vermeidung des oben beschriebenen Abbildens befindet sich das Fasergebilde zudem vorteilhaft nicht direkt an oder unter der Oberfläche des gummielastischen Walzenmantels und tritt nicht an dieser hervor. Der gummielastische Walzenmantel weist daher vorteilhaft eine geschlossene Oberfläche aus dem elastomeren Material auf oder ist von einer anderen geschlossenen Oberfläche, beispielsweise einem PTFE-Schlauch oder Ähnlichem, umhüllt.

Der gummielastische Walzenmantel kann, wie von Mehrschichtwalzen unterschiedlicher Art bekannt, auch aus mehreren Schichten bestehen. Diese können wahlweise aus gleichem und / oder unterschiedlichem Material sein, von gleicher und / oder unterschiedlicher Shore-Härte sein und / oder eine gleiche oder unterschiedliche Dicke aufweisen. Die Oberfläche des gummielastischen Walzenmantels sowie Grenzflächen zwischen den Schichten des Walzenmantels können zudem auch eine Funktionsschicht, beispielsweise aus Polymeren oder Elastomeren mit funktionellen Gruppen oder Zusätzen, in einer Dicke von wenigen µm bis ca. 1 mm aufweisen. Beispiele hierfür sind u.a. in EP 1657076 B1, WO 2009/144271 A1 und WO 2011/006932 A1 offenbart. Weist ein Walzenmantel Schichten unterschiedlicher Shore-Härte auf, so ist das Fasergebilde vorteilhaft in dem Material mit der geringeren Härte angeordnet.

Erfindungsgemäß kann sich das Fasergebilde axial über die gesamte Länge des Walzenmantels erstrecken oder wahlweise in einem oder mehreren vorbestimmten Abschnitten angeordnet sein. Zum Schutz gegen chemische oder mechanische Einwirkungen kann es vorteilhaft sein, dass die Stirnseiten des Walzenbezuges zumindest eine geschlossene Oberfläche aus dem elastomeren Material aufweisen. Auch aus anderen Gründen kann es vorteilhaft sein, an den Stirnseiten des Walzenmantels in einem Bereich von einigen Millimetern oder Zentimetern keine Verstärkung aus dem Fasergebilde vorzusehen. In einigen Anwendungen kann es auch nützlich sein, nur einen Teilbereich, vorzugsweise die seitlichen Endbereiche des Walzenbezuges mit dem Fasergebilde zu verstärken oder zwei oder mehr Einlagen über- oder nebeneinander anzuordnen. Die Zusammensetzung, Beschichtung, Gestalt und Anordnung einer Verstärkung aus dem Fasergebilde können sowohl innerhalb einer zusammenhängenden Verstärkung als auch unter diversen Verstärkungen innerhalb eines Walzenmantels variieren.

In einer bevorzugten Ausführungsform wird der erfindungsgemäße Walzenmantel wahlweise vollständig oder schicht- bzw. abschnittsweise im Wickelverfahren aus streifen- oder plattenförmigem unvulkanisierten Kautschuk hergestellt, wobei eine Verstärkung aus textilem Flächengebilde zwischen zwei übereinander liegende Schichten aus unvulkanisiertem Kautschuk angeordnet wird und / oder bereits im streifen- oder plattenförmigen Kautschuk eingebettet ist.

Der erfindungsgemäße Walzenmantel kann zudem auch vollständig oder schicht- bzw. abschnittsweise im Walzenextrusionsverfahren oder im Stripbuilding-Verfahren hergestellt werden: Im Walzenextrusionsverfahren wird ein Walzenkern durch den Kopfaufsatz (sogenannter Querkopf) eines Gummiextruders geführt und dabei mit einer nahtlosen Beschichtung aus dem extrudierten Material versehen. Erfindungsgemäß kann auf diese Weise beispielsweise ein mit Elastomer vorbeschichteter Walzenkern, der an seiner Mantelfläche eine Auflage aus dem textilen Flächengebilde aufweist, mit einer zweiten Elastomerschicht versehen werden. Im Stripbuilding-Verfahren wird gewöhnlich ein extrudierter Kautschukstreifen auf einen rotierenden Walzenkern aufgetragen, welcher wahlweise axial unbewegt ist oder gleichzeitig in axialer Richtung hin und her bewegt wird, so dass der Kautschukstreifen in Form einer axialen Spirale aus sich überlappenden Kautschukstreifen auf dem Walzenkern abgelegt wird. Durch die Geschwindigkeit der axialen Bewegung wird dabei der Neigungswinkel der abgelegten Kautschukstreifen in Bezug auf die Walzenachse eingestellt. Erfindungsgemäß kann wahlweise durchgehend oder abschnittsweise parallel zum Kautschukstreifen ein Streifen aus dem textilen Flächengebilde zugeführt und somit in einem vorbestimmten Abstand aufeinander folgender Lagen zueinander zwischen den Kautschukstreifen auf dem Walzenkern angeordnet werden.

Bei Herstellung eines Walzenmantels aus Ein- oder Mehrkomponenten-Polyurethansystemen ist neben dem klassischen Gießverfahren auch das sogenannte Ribbon flow-Verfahren bevorzugt, bei dem die Polyurethanmasse auf einen rotierenden Walzenkern aufgetragen wird.

Die Oberfläche des erfindungsgemäßen Walzenmantels ist im Wesentlichen zylindrisch. Gelegentlich kann es aber auch vorteilhaft sein, dass die Oberfläche in Achsrichtung etwas gekrümmt ist, d.h. dass der Durchmesser des Walzenmantels in Achsrichtung variiert. Beispiele hierfür sind konische und bombierte Walzenmäntel. Vorzugsweise weist der Walzenmantel zudem eine glatte und geschlossene Oberfläche auf. Es kann aber abhängig von der vorgesehenen Anwendung einer Walze auch vorteilhaft oder erforderlich sein, die Oberfläche gleichmäßig oder ungleichmäßig in unterschiedlicher Weise mit Unebenheiten, Vertiefungen oder Aussparungen zu versehen. So sind bei Druckwalzen im Mehrbahnendruck Einstiche an der Bezugsoberfläche zur Trennung unterschiedlicher Druckbereiche üblich. Nuten und Einstiche weisen beispielsweise Schleifwalzen und Breitstreckwalzen auf. Auftragwalzen, beispielsweise Leim- und Lackierwalzen, sind an der Walzenoberfläche oft ring- oder spiralförmig mit feinen Rillen von wenigen Millimeter oder einigen 10tel Millimeter Tiefe versehen. Eine Oberfläche mit erhöhter Rauigkeit weisen beispielsweise gelegentlich Feuchtwalzen und Anlegewalzen auf.

## Patentansprüche

1. Walze oder Walzenelement mit einem gummielastischen Walzenmantel in einer Härte von 10 bis 100 Shore A, der im Wesentlichen aus elastomerem Material auf Basis von Naturkautschuk, synthetischem Kautschuk, elastischem Thermoplast, thermoplastischem Elastomer oder ein- oder mehrkomponentigem Polyester- oder Polyetherurethansystem besteht, einschließlich Kombinationen und / oder Mischungen davon, **dadurch gekennzeichnet,**
**dass** der gummielastische Walzenmantel zwischen einer ersten und einer zweiten im Wesentlichen faserfreien Schicht aus dem elastomeren Material eine Schicht aufweist, die ein Fasergebilde aus Fadengelege, Gewebe, Geflecht, Gestrick, Gewirke, Vlies, Filz, gewickelten Fasern oder Fasersträngen, losen Schnittfasern und / oder einer Kombination daraus enthält,
und **dass** die im Wesentlichen faserfreie Schicht einen maximalen Faseranteil von 10 Vol.-% und die Schicht mit dem Fasergebilde einen Faseranteil von mindestens 5 Vol.-%, wenigstens jedoch einen dreimal so hohen Faseranteil wie die im Wesentlichen faserfreie Schicht, aufweist.

2. Walze oder Walzenelement nach Anspruch 1, **dadurch gekennzeichnet, dass** das Fasergebilde in das elastomere Material eingebettet und von diesem durchdrungen ist.

3. Walze oder Walzenelement nach einem der vorstehenden Ansprüche, **dadurch gekennzeichnet, dass** die das Fasergebilde enthaltende Schicht die wesentliche mechanische Verstärkung des gummielastischen Walzenmantels darstellt.

4. Walze oder Walzenelement nach einem der vorstehenden Ansprüche, **dadurch gekennzeichnet, dass** der gummielastische Walzenmantel zwei oder mehr neben- und / oder übereinander angeordnete Schichten mit Fasergebilde aufweist, die jeweils durch eine im Wesentlichen faserfreie Schicht aus dem elastomeren Material voneinander getrennt und wahlweise konzentrisch oder im Querschnitt der Walze spiralförmig erscheinend zur Walzenachse angeordnet sind.

5. Walze oder Walzenelement nach Anspruch 3, **dadurch gekennzeichnet, dass** die Schicht mit dem Fasergebilde bei konzentrischer Anordnung zur Walzenachse zur inneren Mantelfläche des gummielastischen Walzenmantels einen Abstand von wenigstens 30% der Dicke des gummielastischen Walzenmantels aufweist.

6. Walze oder Walzenelement nach einem der vorstehenden Ansprüche, **dadurch gekennzeichnet, dass** das Fasergebilde ein textiles Flächengebilde ist, dessen Fäden sich zumindest teilweise überkreuzen, umschlingen oder berühren wobei die dabei gebildeten Kreuzungs-, Umschlingungs- oder Berührungspunkte im Wesentlichen verschiebefest fixiert sind.

7. Walze oder Walzenelement nach einem der vorstehenden Ansprüche, **dadurch gekennzeichnet, dass** die im Wesentlichen faserfreien Schichten sowie die das Fasergebilde enthaltenden Schichten wahlweise aus einer oder mehreren Schichten gleicher oder unterschiedlicher Dicke und / oder Shore-Härte sowie gleichen oder unterschiedlichen Materials bestehen.

8. Walze oder Walzenelement nach einem der vorstehenden Ansprüche, **dadurch gekennzeichnet, dass** die erste und zweite im Wesentlichen faserfreie Schicht sowie die das Fasergebilde enthaltende Schicht das selbe elastomere Material aufweisen.

9. Walze oder Walzenelement nach einem der vorstehenden Ansprüche, **dadurch gekennzeichnet, dass** die Schicht mit dem Fasergebilde so gestaltet und angeordnet ist, dass sich das Fasergebilde bei bestimmungsgemäßem Gebrauch der Walze oder des Walzenelements nicht an der Oberfläche des Walzenmantels abbildet.

10. Verfahren zur Herstellung einer Walze oder eines Walzenelementes nach Anspruch 1, **dadurch gekennzeichnet, dass** der gummielastische Walzenmantel in Form eines Schlauches vorgefertigt und anschließend auf einen Walzenkern aufgebracht und wahlweise mit diesem verklebt wird.

11. Verfahren nach Anspruch 10, **dadurch gekennzeichnet, dass** der Walzenkern an seiner Mantelfläche eine Deckschicht aus Kunststoff oder Gummi aufweist, auf die der vorgefertigte Schlauch mit Einlage aufgebracht wird.

12. Verfahren nach Anspruch 10, **dadurch gekennzeichnet, dass** nach der Montage des vorgefertigten Schlauchs mit Einlage auf den Walzenkern auf die Mantelfläche des Schlauches und / oder um diesen herum eine oder mehrere Schichten aus Elastomer und / oder Kunststoff aufgebracht werden.

13. Verfahren zur Herstellung einer Walze oder eines Walzenelementes nach Anspruch 1, **dadurch gekennzeichnet, dass** auf einen mit einer ersten Schicht aus dem elastomeren Material versehenen Walzenkern das Fasergebilde aufgebracht und mit einer Deckschicht aus dem elastomeren Material versehen wird.

14. Verfahren nach Anspruch 13, **dadurch gekennzeichnet, dass** der mit einer ersten Schicht aus dem elastomeren Material versehene Walzenkern direkt von Fäden umwoben oder kreuz- oder spiralförmig umwickelt wird.

15. Verwendung einer Walze oder eines Walzenelements nach einem der Ansprüche 1 bis 9 zum Auf- und / oder Übertragen flüssiger Medien in Druckwerken oder Walzenauftragmaschinen, zur mechanischen Bearbeitung von Werkstückoberflächen, oder zum Andrücken, Bewegen, Halten, Leiten, Führen, Quetschen oder Schälen von Materialbahnen, Werkstücken oder Lebensmitteln in Be- und Verarbeitungsmaschinen.

## Claims

1. Roller or roller element having a rubber-elastic roller cover of a Shore A hardness of 10 to 100, which is substantially composed of an elastomeric material based on natural rubber, synthetic rubber, elastic thermoplastic, thermoplastic elastomer, or a single-component or multicomponent polyester or polyether urethane system, including combinations and/or mixtures thereof, **characterized in that**
the rubber-elastic roller cover has, between a first and a second substantially fibre-free layer of the elastomeric material, a layer comprising a fibrous structure made from thread scrim, woven fabric, braided fabric, knitted fabric, warp-knitted fabric, non-woven material, felt, wound fibres or fibre strands, loose cut fibres and/or a combination thereof, and **in that** the substantially fibre-free layer has a maximum fibre fraction of 10% by volume and the layer having the fibrous structure has a fibre fraction of at least 5% by volume, however at least a fibre fraction which is three times higher than the substantially fibre-free layer.

2. Roller or roller element according to Claim 1, **characterized in that** the fibrous structure is embedded in the elastomeric material and is permeated by the latter.

3. Roller or roller element according to one of the preceding claims, **characterized in that** the layer comprising the fibrous structure constitutes the substantial mechanical reinforcement of the rubber-elastic roller cover.

4. Roller or roller element according to one of the preceding claims, **characterized in that** the rubber-elastic roller cover has two or more layers comprising fibrous structure side by side and/or one above the other, said layers in each case being separated from one another by a substantially fibre-free layer of the elastomeric material and optionally being arranged either concentrically or, in the cross section of the roller, spirally appearing in relation to the roller axis.

5. Roller or roller element according to Claim 3, **characterized in that** the layer comprising the fibrous structure in a concentric arrangement in relation to the roller axis has a distance from the inner circumferential surface of the rubber-elastic roller cover of at least 30% of the thickness of the rubber-elastic roller cover.

6. Roller or roller element according to one of the preceding claims, **characterized in that** the fibrous structure is a textile fabric, the threads of which at least partly cross, wrap or contact one another, wherein the crossing, wrapping or contact points thus formed are fixed immovable.

7. Roller or roller element according to one of the preceding claims, **characterized in that** the substantially fibre-free layers and also the layers comprising the fibrous structure are made of either one or more layers of identical or different thickness and/or Shore hardness and also of identical or different material.

8. Roller or roller element according to one of the preceding claims, **characterized in that** the first and second substantially fibre-free layers and also the layer comprising the fibrous structure have the same elastomeric material.

9. Roller or roller element according to one of the preceding claims, **characterized in that** the layer comprising the fibrous structure is configured and arranged such that the fibrous structure is not reproduced on the surface of the roller cover during the intended use of the roller or the roller element.

10. Method for manufacturing a roller or a roller element according to Claim 1, **characterized in that** the rubber-elastic roller cover is prefabricated in the form of a tube and is subsequently applied onto a roller core and optionally adhesively bonded to said roller core.

11. Method according to Claim 10, **characterized in that** the roller core has, on its circumferential surface, a cover layer of plastic or rubber, onto which cover layer the prefabricated tube with insert is applied.

12. Method according to Claim 10, **characterized in that**, after mounting the prefabricated tube with an insert onto the roller core, one or more layers of elastomer and/or plastic are applied onto the circumferential surface of the tube and/or around said tube.

13. Method for manufacturing a roller or a roller element according to Claim 1, **characterized in that** the fibrous structure is applied onto a roller core provided with a first layer of the elastomeric material and said fibrous structure is provided with a covering layer of the elastomeric material.

14. Method according to Claim 13, **characterized in that** the roller core provided with a first layer of the elastomeric material has threads directly woven around it or is wrapped in a crosswise or helical manner by threads.

15. Use of a roller or a roller element according to one of Claims 1 to 9 for the application and/or transfer of liquid media in printing units or roller applicator machines, for the mechanical treatment of workpiece surfaces, or for the pressing, moving, holding, leading, guiding, squeezing or peeling of material webs, workpieces or foodstuffs in treatment and processing machines.

## Revendications

1. Rouleau ou élément de rouleau doté d'une gaine en caoutchouc élastique d'une dureté Shore A de 10 à 100, constitué essentiellement d'un matériau élastomère à base de caoutchouc naturel, de caoutchouc synthétique, de thermoplastique élastique, d'élastomère thermoplastique ou d'un système de polyester ou de polyétheruréthane à un ou plusieurs composants, ainsi que de leurs combinaisons et/ou mélanges,
**caractérisés en ce que**
la gaine en caoutchouc élastique du rouleau présente entre une première et une deuxième couche en matériau élastomère essentiellement exempt de fibres une couche qui contient un produit fibreux constitué d'un ensemble de fils, de tissu, de treillis, de tricot, de bonneterie, de non-tissé, de feutre, de fibres enroulées ou de mèches de fibres, de fibres lâches découpées et/ou de leurs combinaisons et
**en ce que** la couche essentiellement exempte de fibres présente une teneur maximale en fibres de 10 % en volume et la couche dotée du produit fibreux une teneur en fibres d'au moins 5 % en volume, mais cependant trois fois plus élevée que la teneur en fibres de la couche essentiellement exempte de fibres.

2. Rouleau ou élément de rouleau selon la revendication 1, **caractérisés en ce que** le produit fibreux est incorporé dans le matériau élastomère et est imprégné de ce dernier.

3. Rouleau ou élément de rouleau selon l'une des revendications précédentes, **caractérisés en ce que** la couche qui contient un produit fibreux constitue essentiellement le renfort mécanique de la gaine en caoutchouc élastique du rouleau.

4. Rouleau ou élément de rouleau selon l'une des revendications précédentes, **caractérisés en ce que** la gaine en caoutchouc élastique du rouleau présente deux ou plusieurs couches dotées d'un produit fibreux et disposées les unes à côté des autres et/ou les unes au-dessus des autres, chacune séparée des autres par une couche essentiellement exempte de fibres en matériau élastomère et disposée sélectivement de manière concentrique ou en spirale par rapport à l'axe du rouleau en section transversale du rouleau.

5. Rouleau ou élément de rouleau selon la revendication 3, **caractérisés en ce que** lorsqu'elle est disposée concentriquement par rapport à l'axe du rouleau, la couche dotée du produit fibreux présente une distance par rapport à la surface intérieure de la gaine en caoutchouc élastique du rouleau qui représente au moins 30 % de l'épaisseur de la gaine en caoutchouc élastique du rouleau.

6. Rouleau ou élément de rouleau selon l'une des revendications précédentes, **caractérisés en ce que** le produit fibreux est un produit textile plat dont au moins certains des fils se croisent, forment des boucles ou se touchent, les points de croisement, de bouclage ou de contact ainsi formés étant fixés de manière à être essentiellement immobiles.

7. Rouleau ou élément de rouleau selon l'une des revendications précédentes, **caractérisés en ce que** les couches essentiellement exemptes de fibres ainsi que les couches contenant le produit fibreux sont constituées sélectivement d'une ou de plusieurs couches de même épaisseur ou d'épaisseur différente et/ou de dureté Shore identique ou différente ainsi que de matériaux identiques ou différents.

8. Rouleau ou élément de rouleau selon l'une des revendications précédentes, **caractérisés en ce que** la première et la deuxième couche essentiellement exempte de fibres ainsi que la couche contenant un produit fibreux présentent le même matériau élastomère.

9. Rouleau ou élément de rouleau selon l'une des revendications précédentes, **caractérisés en ce que** la couche qui présente le produit fibreux est configurée et disposée de telle sorte que le produit fibreux n'apparaisse pas à la surface de la gaine du rouleau lorsque le rouleau ou l'élément de rouleau est utilisé correctement.

10. Procédé de fabrication d'un rouleau ou d'un élément de rouleau selon la revendication 1, **caractérisé en ce que** la gaine en caoutchouc élastique du rouleau est préfabriquée sous la forme d'un manchon et est ensuite appliquée sur un noyau du rouleau et sélectivement collée sur ce dernier.

11. Procédé selon la revendication 10, **caractérisé en ce que** le noyau du rouleau présente sur sa surface de la gaine une couche de recouvrement en matière synthétique ou en caoutchouc sur laquelle le manchon préfabriqué est appliqué avec incorporation.

12. Procédé selon la revendication 10, **caractérisé en ce qu'**après le montage du manchon préfabriqué incorporé sur le noyau du rouleau, une ou plusieurs couches d'élastomère et/ou de matière synthétique sont appliquées sur la surface de gaine du manchon et/ou autour de ce dernier.

13. Procédé de fabrication d'un rouleau ou d'un élément de rouleau selon la revendication 1, **caractérisé en ce que** le produit fibreux est appliqué sur un noyau du rouleau dotée d'une première couche de matériau élastomère et est doté d'une couche de recouvrement en le matériau élastomère.

14. Procédé selon la revendication 13, **caractérisé en ce que** des fils sont tissés ou enroulés en croix ou en spirale directement autour de noyau du rouleau dotée d'une première couche de matériau élastomère.

15. Utilisation d'un rouleau ou d'un élément de rouleau selon l'une des revendications 1 à 9 pour l'application et/ou le transfert de fluides liquides dans des machines d'impression ou des machines d'application sur rouleau, des machines de traitement mécanique de surface de pièces ou pour repousser, déplacer, maintenir, guider, écraser ou peler des nappes de matière, de pièces ou des aliments dans des machines de traitement.
